# EUROPÄISCHE PATENTANMELDUNG

(11) **EP 4 835 607 A1**
(43) Veröffentlichungstag der Anmeldung: **04.11.2026**
(21) Anmeldenummer: 26172312.6
(22) Anmeldetag: 14.04.2026
(51) Int. Cl.: G05G 5/03, F16H 59/10, F16H 59/02, F16H 61/24

(54) **HANDBETÄTIGUNGSAKTUATOR UND KRAFTFAHRZEUG**

(30) Priorität: 29.04.2025 DE 102025116493
(71) Anmelder: Dr. Ing. h.c. F. Porsche Aktiengesellschaft, 70435 Stuttgart (DE)
(72) Erfinder: Kühner, Manuel, 36100 Petersberg (Marbach) (DE); Lipphardt, Simon, 71088 Holzgerlingen (DE)

(57) **Zusammenfassung**

Die Erfindung betrifft einen Handbetätigungsaktuator (1), insbesondere für ein Kraftfahrzeug, mit einem Aktuatorgehäuse (2) und einem Betätigungshebel (3), wobei der Betätigungshebel (3) in dem Aktuatorgehäuse (2) verschwenkbar gelagert angeordnet ist, wobei zumindest eine erste Federanordnung (9) vorgesehen ist, welche mit dem Betätigungshebel (3) zusammenwirkt, wobei der Betätigungshebel (3) mittels der zumindest einen Federanordnung (9) bezüglich einer ersten stabilen Ruhelage gelagert angeordnet ist und weiterhin ein steuerbarer Aktuator (10) angeordnet ist, welcher den Betätigungshebel (3) in zumindest einem Betriebszustand des Aktuators (10) bezüglich zumindest einer zweiten stabilen Ruhelage gelagert anordnet.

## Beschreibung

Die Erfindung betrifft einen Handbetätigungsaktuator und ein Kraftfahrzeug mit einem solchen Handbetätigungsaktuator.

Kraftfahrzeuge des Standes der Technik weisen oftmals beispielsweise einen Schalthebel für das Schalten eines manuellen Schaltgetriebes oder einen Wählhebel für das Bedienen eines automatischen Getriebes auf. Dabei ist der Schalthebel mechanisch mit dem manuellen Schaltgetriebe gekoppelt, um die Gänge des manuellen Schaltgetriebes zu Schalten. Auch weist ein solches Kraftfahrzeug eine Kupplung im Antriebsstrang und ein Kupplungspedal zur Betätigung der Kupplung auf.

Das Kraftfahrzeug mit einem automatischen Getriebe weist im Vergleich hierzu keine vom Fahrer zu betätigende Kupplung und entsprechend auch kein Kupplungspedal auf. Der Wählhebel ist mechanisch mit dem automatischen Getriebe gekoppelt.

Der Schalthebel und auch der Wählhebel werden in modernen Kraftfahrzeugen typischerweise eingespart und durch Betätigungstasten ersetzt, was Kosten einspart und eine automatisierte elektronisch gesteuerte Betätigung des automatischen Getriebes erlaubt. Die vollautomatische Steuerung von Kraftfahrzeugen wird jedoch nicht von jedem Fahrer gewünscht, weil damit auch ein individueller Eingriff durch den Fahrer erschwert oder vermieden wird, was jedoch von manchen Fahrern nach wie vor bevorzugt wird.

Es besteht entsprechend der Wunsch nach einer Remanualisierung von Kraftfahrzeugen, um gewisse Funktionalitäten wieder manuell durchführen zu können, wie beispielsweise die manuelle Betätigung des automatischen Getriebes als manuelles Schaltgetriebe und/oder die sequentielle Schaltung des automatischen Getriebes.

Dazu ist es allerdings notwendig, dass ein Handbetätigungsaktuator verwendbar ist, welcher mit einem Betätigungshebel ausgestattet ist, mit welchem die jeweilige manuelle Betätigung und/oder die sequentielle Schaltung durchführbar ist.

Es ist die Aufgabe, einen Handbetätigungsaktuator zu schaffen, welcher mit einem geeigneten Betätigungshebel ausgestattet werden kann, um sowohl eine manuelle Betätigung des Getriebes als auch eine sequentielle Schaltung durchführen zu können. Auch ist es die Aufgabe, ein Kraftfahrzeug mit einer umfangreicheren manuellen Betätigbarkeit zu schaffen.

Die Aufgabe zu dem Handbetätigungsaktuator wird mit den Merkmalen von Anspruch 1 gelöst.

Ein Ausführungsbeispiel der Erfindung betrifft einen Handbetätigungsaktuator, insbesondere für ein Kraftfahrzeug, mit einem Aktuatorgehäuse und einem Betätigungshebel, wobei der Betätigungshebel in dem Aktuatorgehäuse verschwenkbar gelagert angeordnet ist, wobei zumindest eine erste Federanordnung vorgesehen ist, welche mit dem Betätigungshebel zusammenwirkt, wobei der Betätigungshebel mittels der zumindest einen Federanordnung bezüglich einer ersten stabilen Ruhelage gelagert angeordnet ist und weiterhin ein steuerbarer Aktuator angeordnet ist, welcher den Betätigungshebel in zumindest einem Betriebszustand des Aktuators bezüglich zumindest einer zweiten stabilen Ruhelage gelagert anordnet. Dadurch kann erreicht werden, dass der Betätigungshebel in einem ersten Betriebszustand des Betätigungshebels nur eine stabile Ruhelage aufweist, so dass er beispielsweise für eine Betätigung eines sequentiellen Getriebes mit (+)- und (-)-Stellungen des Betätigungshebels vorgesehen ist und in einem weiteren Betriebszustand des Betätigungshebels mit mehreren stabilen Ruhelagen versehen ist, um beispielsweise ein manuelles Schaltgetriebe mit mehreren Gangstellungen schalten zu können. Es ist also möglich, zwischen verschiedenen Funktionalitäten des Betätigungshebels umzuschalten.

Bei einem Ausführungsbeispiel der Erfindung ist es auch zweckmäßig, wenn der Betätigungshebel in dem Aktuatorgehäuse in einer ersten transversalen Richtung und in einer zweiten lateralen Richtung verlagerbar gelagert ist. So kann der Betätigungshebel einerseits entlang einer ersten Richtung beispielsweise in einem Modus für ein sequentielles Getriebe verlagert werden und andererseits in beiden Richtungen in einem Modus für ein manuelles Getriebe.

Auch ist es zweckmäßig, wenn der Betätigungshebel in dem Aktuatorgehäuse in zumindest einer Gasse oder in mehreren Gassen in der ersten transversalen Richtung verlagerbar gelagert ist und quer zu der Gasse oder zu den Gassen in der zweiten lateralen Richtung verlagerbar gelagert ist. So kann der Betätigungshebel einerseits entlang einer ersten Richtung in einer Gasse beispielsweise in einem Modus für ein sequentielles Getriebe verlagert werden und andererseits in beiden Richtungen in mehreren Gassen und quer dazu beispielsweise in einem Modus für ein manuelles Getriebe.

Besonders vorteilhaft ist es auch, wenn der Betätigungshebel in einem Lager um zumindest eine Achse verschwenkbar gelagert angeordnet ist und der Aktuator das Lager bildet oder Teil des Lagers ist. Damit kann der Aktuator unmittelbar Einfluss nehmen auf die Beweglichkeit und Verlagerbarkeit des Betätigungshebels.

Bei einem Ausführungsbeispiel ist es zweckmäßig, wenn der Aktuator ein magnetorheologischer Aktuator ist oder einen solchen aufweist. Ein solcher Aktuator ist in der Lage die Verlagerbarkeit des Betätigungshebels zu bremsen, wie zu blockieren, oder alternativ freizugeben, so dass er manuell verlagert werden kann. Damit kann der Aktuator die Verlagerbarkeit des Betätigungshebels steuern.

Bei einem weiteren Ausführungsbeispiel ist es auch zweckmäßig, wenn der Aktuator zumindest einen Permanentmagneten oder zumindest ein weichmagnetisches Element aufweist, welches mit dem Betätigungshebel verlagerbar angeordnet ist und weiterhin zumindest eine Magnetspule oder zumindest ein Elektromagnet ortsfest benachbart zu dem Lager angeordnet ist oder der Aktuator zumindest eine Magnetspule oder zumindest einen Elektromagneten aufweist, welche oder welcher mit dem Betätigungshebel verlagerbar angeordnet ist und weiterhin zumindest einen Permanentmagneten oder zumindest ein weichmagnetisches Element ortsfest benachbart zu dem Lager angeordnet ist, so dass in der Interaktion von Permanentmagnet oder weichmagnetischem Element mit der Magnetspule oder dem Elektromagneten die zumindest eine zweite stabile Ruhelage zuschaltbar erzeugbar sind. Dadurch kann eine zweite oder auch weitere stabile Ruhelage erzeugt und hinzugeschaltet werden, was sehr vorteilhaft elektronisch gesteuert werden kann, wenn dies benötigt wird.

Bei einem weiteren Ausführungsbeispiel ist es zweckmäßig, wenn der Aktuator zumindest einen Permanentmagneten oder zumindest ein weichmagnetisches Element aufweist, welcher oder welches mit dem Betätigungshebel verlagerbar angeordnet ist und weiterhin zwei oder mehr Magnetspulen oder zwei oder mehr Elektromagnete ortsfest benachbart zu dem Lager angeordnet sind oder der Aktuator zumindest eine Magnetspule oder zumindest einen Elektromagneten aufweist, welche oder welcher mit dem Betätigungshebel verlagerbar angeordnet ist und weiterhin zwei oder mehr Permanentmagnete oder zwei oder mehr weichmagnetische Elemente ortsfest benachbart zu dem Lager angeordnet sind, so dass in der Interaktion von Permanentmagnet oder weichmagnetischem Element mit der Magnetspule oder dem Elektromagneten zumindest zwei zweite stabile Ruhelagen zuschaltbar erzeugbar sind.

Auch ist es vorteilhaft, wenn die Federanordnung zumindest ein Federelement aufweist, welches sowohl am Betätigungshebel als auch am Aktuatorgehäuse angelenkt ist, so dass der Betätigungshebel entgegen einer Rückstellkraft des Federelements verlagerbar angeordnet ist, insbesondere die Federanordnung zumindest zwei Federelemente aufweist, welche sowohl am Betätigungshebel als auch am Aktuatorgehäuse angelenkt sind, so dass der Betätigungshebel entgegen einer Rückstellkraft zumindest eines Federelements verlagerbar angeordnet ist. Damit kann eine unkomplizierte Gestaltung geschaffen werden, um die erste stabile Ruhelage zu erzeugen.

Auch ist es zweckmäßig, wenn zumindest ein Sensor vorgesehen ist, welcher die Einstellung und/oder die Lage des Betätigungshebels detektiert. Dadurch kann das Sensorsignal über die Lage oder die Einstellung des Betätigungshebels für die weitere Steuerung eines automatischen Getriebes oder eines Elektromotors genutzt werden.

Die Aufgabe zu dem Kraftfahrzeug wird mit den Merkmalen von Anspruch 10 gelöst.

Ein Ausführungsbeispiel der Erfindung betrifft ein Kraftfahrzeug mit einem erfindungsgemäßen Handbetätigungsaktuator.

Im Folgenden wird die Erfindung anhand eines Ausführungsbeispiels unter Bezugnahme auf die Zeichnung detailliert erläutert. In der Zeichnung zeigt:

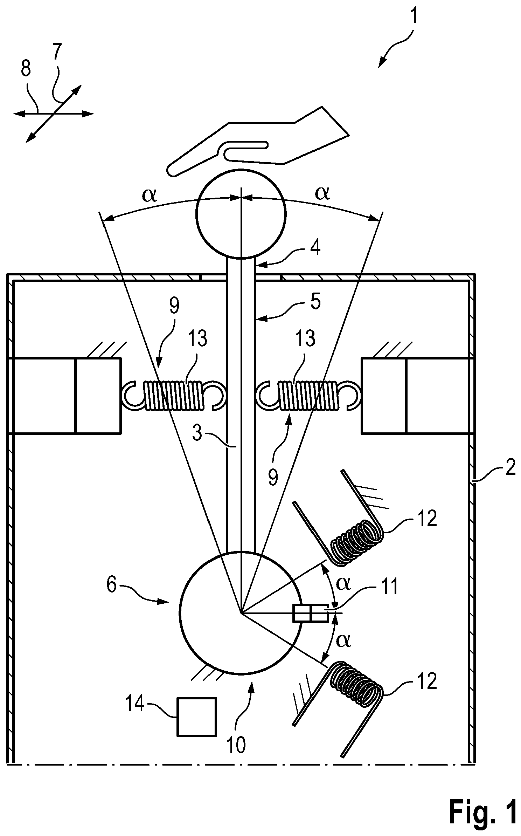

- Fig. 1: eine schematische Darstellung eines Ausführungsbeispiels eines Handbetätigungsaktuators mit einem Betätigungshebel.

Die Figur 1 zeigt in einer schematischen Darstellung ein Ausführungsbeispiel eines Handbetätigungsaktuators 1, insbesondere für ein Kraftfahrzeug.

Der Handbetätigungsaktuator 1 weist ein Aktuatorgehäuse 2 und einen Betätigungshebel 3 auf, der in dem Aktuatorgehäuse 2 verlagerbar gelagert angeordnet ist.

Der Betätigungshebel 3 weist typischerweise einen ersten Hebelarmbereich 4 und einen zweiten Hebelarmbereich 5 auf. Der Betätigungshebel 3 ist in dem Aktuatorgehäuse 2 derart verschwenkbar mittels eines Lagers 6 gelagert angeordnet, dass der erste Hebelarmbereich 4 von dem Aktuatorgehäuse 2 nach außen, typischerweise nach oben, abragt und der zweite Hebelarmbereich 5 in das Aktuatorgehäuse 2 hineinragt.

Bei einer Verlagerung des Betätigungshebels 3 kann der Betätigungshebel 3 im Aktuatorgehäuse 2 lateral gemäß Richtung 7 als auch transversal gemäß Richtung 8 verlagert werden.

Gemäß dem gezeigten Ausführungsbeispiel des Handbetätigungsaktuators 1 in Figur 1 ist zumindest eine erste Federanordnung 9 vorgesehen oder es sind mehrere Federanordnungen 9 vorgesehen, welche mit dem Betätigungshebel 3 zusammenwirkt oder zusammenwirken. Dabei ist die jeweilige Federanordnung 9 beispielsweise sowohl an dem Aktuatorgehäuse 2 als auch an dem Betätigungshebel 3 angelenkt, um in Zug- und/oder in Druckrichtung eine Kraft auf den Betätigungshebel 3 zu übertragen, so dass in der Ruhelage oder Mittellage eine erste stabile Ruhelage vorgesehen ist. Dadurch ist der Betätigungshebel 3 mittels der zumindest einen Federanordnung 9 bezüglich einer ersten stabilen Ruhelage gelagert angeordnet.

Die Zugrichtung beispielsweise ist eine Richtung, in welcher die jeweilige Federanordnung 9 eine Zugkraft auf den Betätigungshebel 3 ausübt und die Druckrichtung ist eine Richtung, in welcher die Federanordnung 9 eine Druckkraft auf den Betätigungshebel 3 ausübt. Bei zwei sich gegenüberliegenden Federanordnungen 9, wie in Figur 1 gezeigt, sind die Zug- und Druckrichtungen der jeweiligen Federanordnung 9 jeweils vertauscht.

Gemäß einem weiteren Gedanken der Erfinder weist die Federanordnung 9 zumindest ein Federelement 13 auf, welches sowohl am Betätigungshebel 3 als auch am Aktuatorgehäuse 2 angelenkt ist, so dass der Betätigungshebel 3 entgegen einer Rückstellkraft des Federelements 13 verlagerbar angeordnet ist, insbesondere die Federanordnung 9 zumindest zwei Federelemente 13 aufweist, welche sowohl am Betätigungshebel 3 als auch am Aktuatorgehäuse 2 angelenkt sind, so dass der Betätigungshebel 3 entgegen einer Rückstellkraft zumindest eines Federelements 13 verlagerbar angeordnet ist.

Weiterhin ist ein steuerbarer Aktuator 10 angeordnet, welcher den Betätigungshebel 3 in zumindest einem Betriebszustand des Aktuators 10 bezüglich zumindest einer zweiten stabilen Ruhelage gelagert anordnet. Im gezeigten Ausführungsbeispiel lagert der Aktuator 10 den Betätigungshebel 3 sogar bezüglich zweier zweiter Ruhelagen. Dabei ist der Betätigungshebel 3 beispielsweise jeweils um den Winkel α verschwenkt, wie es in Figur 1 angedeutet ist.

In Figur 1 ist zu erkennen, dass der Betätigungshebel 3 in dem Aktuatorgehäuse 2 in einer ersten transversalen Richtung 8 und in einer zweiten lateralen Richtung 7 verlagerbar gelagert ist.

Dabei kann der Betätigungshebel 3 in dem Aktuatorgehäuse 2 in zumindest einer Gasse oder in mehreren Gassen in der ersten transversalen Richtung 8 verlagerbar sein und quer zu der Gasse oder zu den Gassen in der zweiten lateralen Richtung 7 verlagerbar gelagert sein.

Bevorzugt ist die erste stabile Ruhelage in einer ersten Gasse positioniert und die zweiten stabilen Ruhelagen sind ebenfalls in dieser Gasse positioniert und/oder sie sind in anderen Gassen positioniert. So können die zweiten stabilen Ruhelagen auch in jeder Gasse vorgesehen sein.

Gemäß dem gezeigten Ausführungsbeispiel ist der Betätigungshebel 3 in einem Lager 6 um zumindest eine Achse verschwenkbar gelagert angeordnet und der Aktuator 10 bildet das Lager 6 oder er ist ein Teil des Lagers 6.

In einem bevorzugten Ausführungsbeispiel ist der Aktuator 10 ein magnetorheologischer Aktuator oder er weist einen solchen magnetorheologischen Aktuator auf.

Gemäß dem gezeigten Ausführungsbespiel weist der Aktuator 10 zumindest einen Permanentmagneten 11 oder zumindest ein weichmagnetisches Element auf, welches mit dem Betätigungshebel 3 verlagerbar angeordnet ist. Weiterhin ist zumindest eine Magnetspule 12, gezeigt sind zwei Magnetspulen 12, oder zumindest ein Elektromagnet ortsfest benachbart zu dem Lager 6 angeordnet.

Wenn eine Magnetspule 12 aktiviert ist oder ein Elektromagnet aktiviert ist, wirkt sie bzw. er mit dem Permanentmagneten 11 oder dem zumindest einen weichmagnetischen Element zusammen und hält den Betätigungshebel 3 in seiner um den Winkel α verschwenkten Position, wenn sie sich gegenüberliegen. Wird die Magnetspule 12 wieder deaktiviert oder der Elektromagnet wird wieder deaktiviert, so ist die Haltewirkung auch wieder aufgelöst.

Gleichzeitig ist der Aktuator 10 ein magnetorheologischer Aktuator und dieser kann die Verschwenkbarkeit des Betätigungshebels 3 zusätzlich bei Aktivierung des magnetorheologischen Materials bremsen oder blockieren oder alternativ freigeben, je nach Ansteuerung, so dass dadurch die Verlagerbarkeit des Betätigungshebels 3 noch einmal stärker beeinflusst wird, um ihn in einer stabilen Ruhelage zu halten oder eine Verlagerung des Betätigungshebels 3 zu erleichtern.

Alternativ zu der obigen Gestaltung gemäß Figur 1 kann der Aktuator 10 auch zumindest eine Magnetspule 12 oder zumindest einen Elektromagneten aufweisen, welche oder welcher mit dem Betätigungshebel 3 verlagerbar angeordnet ist und weiterhin ist zumindest ein Permanentmagnet 11 oder zumindest ein weichmagnetisches Element ortsfest benachbart zu dem Lager 6 angeordnet, so dass in der Interaktion von Permanentmagnet 11 oder weichmagnetischem Element mit der Magnetspule 12 oder dem Elektromagneten die zumindest eine zweite stabile Ruhelage zuschaltbar erzeugbar ist.

Auch ist es bevorzugt, wenn der Aktuator 10 zumindest einen Permanentmagneten 11 oder zumindest ein weichmagnetisches Element aufweist, welcher oder welches mit dem Betätigungshebel 3 verlagerbar angeordnet ist und weiterhin zwei oder mehr Magnetspulen 12 oder zwei oder mehr Elektromagnete ortsfest benachbart zu dem Lager 6 angeordnet sind, wie dies auch in Figur 1 gezeigt ist.

Alternativ kann der Aktuator 10 auch zumindest eine Magnetspule 12 oder zumindest einen Elektromagneten aufweisen, welche oder welcher mit dem Betätigungshebel 3 verlagerbar angeordnet ist und weiterhin zwei oder mehr Permanentmagnete 11 oder zwei oder mehr weichmagnetische Elemente ortsfest benachbart zu dem Lager 6 angeordnet sind, so dass in der Interaktion von Permanentmagnet 11 oder weichmagnetischem Element mit der Magnetspule 12 oder dem Elektromagneten zumindest zwei zweite stabile Ruhelagen zuschaltbar erzeugbar sind.

Auch ist zumindest ein Sensor 14 vorgesehen, welcher die Einstellung und/oder die Lage des Betätigungshebels 3 detektiert. Mit den Sensorsignalen des Sensors 14 kann dann aufgrund der detektierten Verlagerung des Betätigungshebels 3 eine Steuerung eines Getriebes oder eines Elektromotors erfolgen.

### Bezugszeichenliste

- 1: Handbetätigungsaktuator
- 2: Aktuatorgehäuse
- 3: Betätigungshebel
- 4: erster Hebelarmbereich
- 5: zweiter Hebelarmbereich
- 6: Lager
- 7: laterale Richtung
- 8: transversale Richtung
- 9: Federanordnung
- 10: Aktuator
- 11: Permanentmagnet
- 12: Magnetspule
- 13: Federelement
- 14: Sensor

## Patentansprüche

1. Handbetätigungsaktuator (1), insbesondere für ein Kraftfahrzeug, mit einem Aktuatorgehäuse (2) und einem Betätigungshebel (3), wobei der Betätigungshebel (3) in dem Aktuatorgehäuse (2) verschwenkbar gelagert angeordnet ist, wobei zumindest eine erste Federanordnung (9) vorgesehen ist, welche mit dem Betätigungshebel (3) zusammenwirkt, wobei der Betätigungshebel (3) mittels der zumindest einen Federanordnung (9) bezüglich einer ersten stabilen Ruhelage gelagert angeordnet ist und weiterhin ein steuerbarer Aktuator (10) angeordnet ist, welcher den Betätigungshebel (3) in zumindest einem Betriebszustand des Aktuators (10) bezüglich zumindest einer zweiten stabilen Ruhelage gelagert anordnet.

2. Handbetätigungsaktuator (1) nach Anspruch 1, **dadurch gekennzeichnet, dass** der Betätigungshebel (3) in dem Aktuatorgehäuse (2) in einer ersten transversalen Richtung (8) und in einer zweiten lateralen Richtung (7) verlagerbar gelagert ist.

3. Handbetätigungsaktuator (1) nach Anspruch 1 oder 2, **dadurch gekennzeichnet, dass** der Betätigungshebel (3) in dem Aktuatorgehäuse (2) in zumindest einer Gasse oder in mehreren Gassen in der ersten transversalen Richtung (8) verlagerbar ist und quer zu der Gasse oder zu den Gassen in der zweiten lateralen Richtung (7) verlagerbar gelagert ist.

4. Handbetätigungsaktuator (1) nach Anspruch 1, 2 oder 3, **dadurch gekennzeichnet, dass** der Betätigungshebel (3) in einem Lager (6) um zumindest eine Achse verschwenkbar gelagert angeordnet ist und der Aktuator (10) das Lager (6) bildet oder Teil des Lagers (6) ist.

5. Handbetätigungsaktuator (1) nach Anspruch 4, **dadurch gekennzeichnet, dass** der Aktuator (10) ein magnetorheologischer Aktuator ist oder einen solchen aufweist.

6. Handbetätigungsaktuator (1) nach Anspruch 5, **dadurch gekennzeichnet, dass** der Aktuator (10) zumindest einen Permanentmagneten (11) oder zumindest ein weichmagnetisches Element aufweist, welches mit dem Betätigungshebel (3) verlagerbar angeordnet ist und weiterhin zumindest eine Magnetspule (12) oder zumindest ein Elektromagnet ortsfest benachbart zu dem Lager (6) angeordnet ist oder der Aktuator (10) zumindest eine Magnetspule (12) oder zumindest einen Elektromagneten aufweist, welche oder welcher mit dem Betätigungshebel (3) verlagerbar angeordnet ist und weiterhin zumindest einen Permanentmagneten (11) oder zumindest ein weichmagnetisches Element ortsfest benachbart zu dem Lager (6) angeordnet ist, so dass in der Interaktion von Permanentmagnet (11) oder weichmagnetischem Element mit der Magnetspule (12) oder dem Elektromagneten die zumindest eine zweite stabile Ruhelage zuschaltbar erzeugbar sind.

7. Handbetätigungsaktuator (1) nach Anspruch 5 oder 6, **dadurch gekennzeichnet, dass** der Aktuator (10) zumindest einen Permanentmagneten (11) oder zumindest ein weichmagnetisches Element aufweist, welcher oder welches mit dem Betätigungshebel (3) verlagerbar angeordnet ist und weiterhin zwei oder mehr Magnetspulen (12) oder zwei oder mehr Elektromagnete ortsfest benachbart zu dem Lager (6) angeordnet sind oder der Aktuator (10) zumindest eine Magnetspule (12) oder zumindest einen Elektromagneten aufweist, welche oder welcher mit dem Betätigungshebel (3) verlagerbar angeordnet ist und weiterhin zwei oder mehr Permanentmagnete (11) oder zwei oder mehr weichmagnetische Elemente ortsfest benachbart zu dem Lager (6) angeordnet sind, so dass in der Interaktion von Permanentmagnet (11) oder weichmagnetischem Element mit der Magnetspule (12) oder dem Elektromagneten zumindest zwei zweite stabile Ruhelagen zuschaltbar erzeugbar sind.

8. Handbetätigungsaktuator (1) nach einem der vorhergehenden Ansprüche, **dadurch gekennzeichnet, dass** die Federanordnung (9) zumindest ein Federelement (13) aufweist, welches sowohl am Betätigungshebel (3) als auch am Aktuatorgehäuse (2) angelenkt ist, so dass der Betätigungshebel (3) entgegen einer Rückstellkraft des Federelements (13) verlagerbar angeordnet ist, insbesondere die Federanordnung (9) zumindest zwei Federelemente (13) aufweist, welche sowohl am Betätigungshebel (3) als auch am Aktuatorgehäuse (2) angelenkt sind, so dass der Betätigungshebel (3) entgegen einer Rückstellkraft zumindest eines Federelements (13) verlagerbar angeordnet ist.

9. Handbetätigungsaktuator (1) nach einem der vorhergehenden Ansprüche, **dadurch gekennzeichnet, dass** zumindest ein Sensor (14) vorgesehen ist, welcher die Einstellung und/oder die Lage des Betätigungshebels (3) detektiert.

10. Kraftfahrzeug mit einem Handbetätigungsaktuator (1) nach einem der vorhergehenden Ansprüche.
